# EUROPEAN PATENT APPLICATION

(11) **EP 1 318 444 A2**
(43) Date of publication of application: **11.06.2003**
(21) Application number: 02017723.4
(22) Date of filing: 08.08.2002
(51) Int. Cl.: G06F 1/00, G11B 33/12

(54) **Data encipher/decipher system for a portable rack of a computer**

(30) Priority: 05.12.2001 CN 01140313
(71) Applicant: Chang, Cheng-Chun, Wen-Shan DT, Taipei (TW)
(72) Inventor: Chang, Cheng-Chun, Wen-Shan DT, Taipei (TW)
(74) Representative: Helms, Joachim, Dipl.-Ing. Patentanwalt

(57) **Abstract**

A data encipher/decipher system for a portable rack of a computer comprises a storage device, a circuit board, a encipher/decipher device, an unlock receptacle and a unlock key. The storage device is disposed in and fixedly attached to the portable rack. The circuit board is disposed at the rear side of the portable rack and is attached with a signal connector at the back thereof to separate a signal into a delay connector with a standard IDE interface and a power source plug. The circuit board provides at least two connecting wires extending outward the portable rack and has a signal line. The encipher/decipher device is a control IC with a specific built in logic operation symbol or with an equation operation device and the control IC is mounted on the circuit board to connect with the signal line. The unlock receptacle is disposed at an outer side of the portable rack to connect with the signal line. The unlock key with an inner unlock chip provides a unlock plug at an end thereof to be inserted into the unlock receptacle. Once the delay connector and the power source plug are connected to the storage device to form a status of signal on and power on, the control IC performs a procedure for identifying the password of the unlock key as soon as the unlock key is inserted into the unlock receptacle. In case of the password of the unlock key conforming the password of the control IC, the user can read data in the storage device or write data into the storage device under a condition of being deciphered or enciphered immediately.

## Description

### BACKGROUND OF THE INVENTION

### 1. Field of The Invention:

The present invention relates to a data encipher/decipher system for a portable rack of a computer, and, particularly to a promptly enciphering or deciphering system for data in a storage device in a mobile rack or an external rack of a computer to secure the date effectively.

### 2. Description of Related Art:

Currently, for a conventional storage device such as hard disk, especially a hard disk arranged in a mobile rack or an external rack, the data in the hard disk can be carried about with the user so that mostly the hard disk has been used for data conservation or data back-up for years. Although the portable rack with the storage device offers facility for being carried with the user, the data therein is much easier to be read by others by way of another computer so that it is insecure and without confidence for the data at all. Hence, to protect the data from being learned is an important subject regardless from the standpoint of securing the business secret of a designer or securing the intellectual property of saved program owned by the user.

The conventional security used in the computer usually utilizes software encryption, that is, the user has to key-in an assigned password and passes the procedure of password check before using the computer or a certain program. In case of having forgotten the password, the consequence will be unimaginable. Of course, the software designer has designed a decoding program to solve the preceding problem. But, the decoding program gives others a way to unlock the self- assigning password and see all files or data so that the function of security becomes useless. Hence, the software encryption is not possible to prevent the data in the computer from being stolen deliberately. Therefore, once a person with certain intention takes the mobile rack or the external rack, the data therein becomes insecure at all.

### SUMMARY OF THE INVENTION

Accordingly, an object of the present invention is to provide a data encipher/decipher system for a portable rack of a computer, which comprises a storage device, a circuit board, a encipher/decipher device, an unlock receptacle and a unlock key. The storage device is disposed in and fixedly attached to the portable rack. The circuit board is disposed at the rear side of the portable rack and is attached with a signal connector at the back thereof to separate a signal into a delay connector with a standard IDE interface and a power source plug. The circuit board provides at least two connecting wires extending outward the portable rack and has a signal line. The encipher/decipher device is a control IC with a specific built in logic operation symbol or with an equation operation device and the control IC is mounted on the circuit board to connect with the signal line. The unlock receptacle is disposed at an outer side of the portable rack to connect with the signal line. The unlock key with an inner unlock chip provides a unlock plug at an end thereof to be inserted into the unlock receptacle. Once the delay connector and the power source plug are connected to the storage device to form a status of signal on and power on, the control IC performs a procedure for identifying the password of the unlock key as soon as the unlock key is inserted into the unlock receptacle. In case of the password of the unlock key conforming the password of the control IC, the user can read data in the storage device or write data into the storage device under a condition of being deciphered or enciphered immediately.

### BRIEF DESCRIPTION OF THE DRAWINGS

The present invention can be more fully understood by reference to the following description and accompanying drawings, in which:
Fig. 1 is a disassembled perspective view of a mobile rack with a encipher/decipher device according to the present invention; and
Fig. 2 is a top view of the mobile rack with a encipher/decipher device shown in Fig. 1 illustrating the structure thereof after being assembled.

### DETAILED DESCRIPTION OF THE PREFERRED EMBODIMENTS

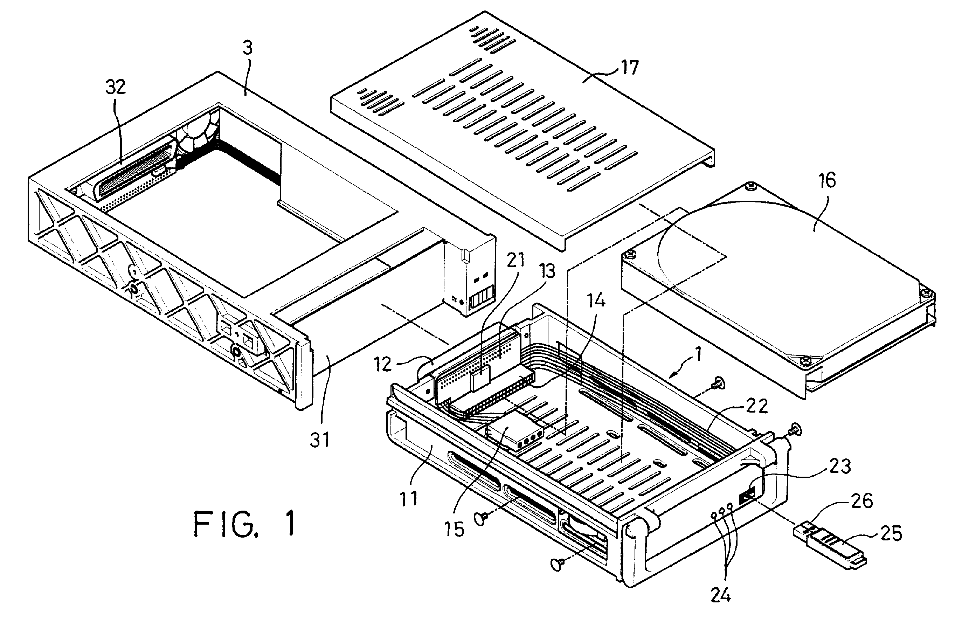

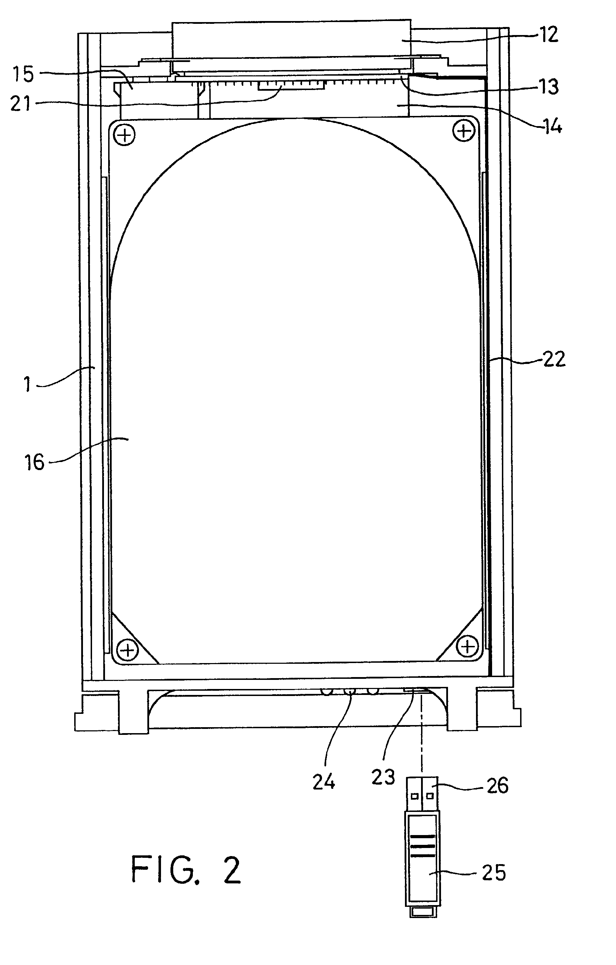

Referring to Figs. 1 and 2, the present invention is composed of a portable rack 1 and a encipher/decipher device 2.

Wherein, the portable rack 1 is a mobile rack or an external rack and the mobile rack as shown in Figs. 1 and 2 is taken as an example. The inner rack 11 can be pushed into the outer rack 3 and taken out from the rack 3 through the front gate 31 so that the inner pin connector 12 (50 pins) at the back of the inner rack 11 can engage with the outer connector 32 in the outer rack 3 disposed at the housing on the main unit of the computer so as to form a close circuit for the IDE interface signal and the power source. The inner connector 12 is fixedly attached to a circuit board 13 and further separates the IDE interface signal and the power source into a delay connector 14 of a standard IDE interface (40 pins) and a power source plug 15 for connecting with a storage device 16 such as a hard disk, a ZIP disk drive, a magneto-optical disk drive, a tape unit, or a card read so as to constitute signal connection and power supply. Finally, a covering 17 is used for closing the upper opening of the inner rack 11 as protect of the storage device 16. In case of the portable rack 1 being an external rack, the storage device can be a compact disk burner in addition to the preceding storage devices. The mobile rack and the external rack associated with different storage devices are belonged to the prior art so that no detail will be described further.

The difference of the portable rack 1 according to the present invention from the conventional ones is a encipher/decipher device 2 is added to the portable rack 1. The encipher/decipher device 2 is specific logic operation symbol or a control IC 21 with a calculation function of an equation such that a password with encryption of 212 random numbers can be offered to conform the data encryption standard (DES) used by the U.S. government. Besides, the circuit board 13 provides a plurality of connecting lines 22 extending to the outer side of the portable rack 1 for connecting with a unlock receptacle 23 such as a USB receptacle or a IEEE 1394 receptacle, and a plurality of signal lights 24 so as to indicate the power source, the storage device or the password check being in a state of normal operation as soon as the signal lights are on respectively. Further, a unlock key 25 with a unlock chip is provided on the circuit board 13 and a unlock plug 26 such as a USB plug or a IEEE 1394 plug extends from the front side of the unlock key 25 for being inserted into the unlock receptacle 23. As soon as the unlock plug 26 engages with the unlock receptacle 23, the control IC 21 carries out a check for the password assigned to the unlock key 25 and the function of unlocking. Once the password check is failed, the storage device 16 keeps in a state of locking to secure the data in the storage device.

Referring to all the figures again, it is not possible for the storage device 16 to be read out or written in by the user in case of the unlock receptacle 23 is inserted with the lock key 25. When a unlock key 25 is inserted into the unlock receptacle 23, the control IC 21 checks the chip in the unlock key 25 if the password of the chip conforms the password of the control IC. Once both passwords do not coincide, that is, the results of mathematic operation for the chip and the control IC do not correspond to each other, it means the password of the unlock key is incorrect and the storage device is still in a state of locking. Only the correct unlock key 25 is inserted into the unlock receptacle 23 and the password thereof can conform the password of the control IC during the password check. At this time, the signal light 24 may be lit up to indicate the password of the unlock key 25 is correct and the user can read or write data in the storage device 16 such that the operation for unlocking or locking a file or bytes can be performed forthwith.

It is appreciated from the foregoing, the present invention provides a control IC with a encipher/decipher device of hardware and a unlock key, and a result of mathematic operation is performed by the control IC to identify the password assigned to the unlock key such that the storage device in the portable rack can be executed with encipher/decipher procedure immediately so as to secure the data in the storage device and keep the data in secret completely. Especially, in case of the storage device being a compact disk rewriter, the data in the burned compact disk may provide a function of encryption so that any one else is not possible to read the data locked at any time unless the same compact disk rewriter is used. Besides, the standard IDE interface is used in the present invention for the transmission of signal so that it is compatible with all operation systems. When some one else tries to take out the data in the portable rack and makes mistake during the procedure of password check, the storage device still keeps in a state of locking. In this way, the security of the storage device in the conventional portable rack can be enhanced substantially.

While the invention has been described with reference to a preferred embodiment thereof, it is to be understood that modifications or variations may be easily made without departing from the spirit of this invention, which is defined in the appended claims.

## Claims

1. A data encipher/decipher system for a portable rack of a computer, comprising:
a storage device, being disposed in and fixedly attached to the portable rack;
a circuit board, being disposed at a rear side of the portable rack, being attached with a signal connector at a back thereof for separating a signal into a delay connector with a standard IDE interface and a power source plug, providing at least two connecting wires extending outward the portable rack, and having a signal line;
an encipher/decipher device, being a control IC with a specific built in logic operation symbol or with an equation operation device, being mounted on the circuit board to connect with the signal line;
an unlock receptacle, being disposed at an outer side of the portable rack to connect with the signal line; and
a unlock key with an inner unlock chip, providing a unlock plug at an end thereof for being inserted into the unlock receptacle;
whereby, once the delay connector and the power source plug are connected to the storage device to result in a state of signal on and power on, the control IC performs a procedure of identifying a password of the unlock key as soon as the unlock key is inserted into the unlock receptacle; and if the password of the unlock key conforms a password of the control IC, a user can read data in the storage device or write data into the storage device under a condition of the data being deciphered or being in a state of encryption immediately.

2. The data encipher/decipher system for a portable rack of a computer according to claim 1, wherein the portable rack is a mobile rack composed of an inner rack and an outer rack; the outer rack is mounted to a computer housing and the inner rack is detachably fixed to the outer rack by way of a connector on the inner rack detachably fitting with the a connector on the outer rack.

3. The data encipher/decipher system for a portable rack of a computer according to claim 2, wherein one of following storage devices can be selected to accommodate to the mobile rack: a hard disk, a zip disk drive, a magneto-optical disk drive, a tape unit and a card read.

4. The data encipher/decipher system for a portable rack of a computer according to claim 1, wherein the portable rack is an external rack.

5. The data encipher/decipher system for a portable rack of a computer according to claim 4, wherein one of following storage devices can be selected to accommodate to the external rack: a compact disk rewriter, a hard disk, a zip disk drive, a magneto-optical disk drive, a tape unit and card read.

6. The data encipher/decipher system for a portable rack of a computer according to claim 1, wherein the circuit board further extends a plurality of lead wires to join at least two signal lights disposed on an outer side of the portable rack to indicate a status of the power source, the storage device or identifying the password.

7. The data encipher/decipher system for a portable rack of a computer according to claim 1, wherein the unlock receptacle is a USB receptacle or a IEEE 1394 receptacle and the unlock plug is a USB plug or a IEEE plug.
